(19) Europäisches Patentamt / European Patent Office / Office européen des brevets

(11) **EP 3 054 038 B1**

(12) **EUROPEAN PATENT SPECIFICATION**

(45) Date of publication and mention
of the grant of the patent:
**12.02.2025 Bulletin 2025/07**

(51) International Patent Classification (IPC):
**E01C 13/08** (2006.01)    **D01F 6/30** (2006.01)
**D01F 6/04** (2006.01)

(21) Application number: **15382041.0**

(52) Cooperative Patent Classification (CPC):
**E01C 13/08; D01F 6/04; D01F 6/30;** D01D 5/253

(22) Date of filing: **06.02.2015**

(54) **Method of manufacturing an artificial turf filament**

Verfahren zur Herstellung eines Kunstrasenfilaments

Procédé de production d'un filament de gazon artificiel

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.08.2016 Bulletin 2016/32**

(73) Proprietor: **Dow Global Technologies LLC
Midland, MI 48674 (US)**

(72) Inventors:
• **Bonavoglia, Barbara**
  **8810 Horgen (CH)**
• **Deavenport, Joseph L.**
  **Lake Jackson, TX Texas 77566 (US)**
• **Lòpez, David**
  **43006 Tarragona (ES)**
• **Patel, Rajen M.**
  **Lake Jackson, TX Texas 77566 (US)**

(74) Representative: **Elzaburu S.L.P.
Edificio Torre de Cristal
Paseo de la Castellana 259 C, planta 28
28046 Madrid (ES)**

(56) References cited:
**EP-A1- 0 632 063     EP-A1- 2 752 509
WO-A1-2005/052010     WO-A1-2005/103095**

WO-A2-2011/134897    US-A1- 2013 190 465
US-A1- 2014 080 970

• FOSTER G N ET AL: "OXIDATION BEHAVIOR AND STABILIZATION OF METALLOCENE AND OTHER POLYOLEFINS", ANGEWANDTE MAKROMOLEKULARE CHEMIE. APPLIED MACROMOLECULARCHEMISTRY AND PHYSICS, WILEY VCH, WEINHEIM, DE, vol. 252, 1 December 1997 (1997-12-01), pages 11 - 32, XP000737000, ISSN: 0003-3146, DOI: 10.1002/APMC.1997.052520102

• FULCHIRON R ET AL: "CORRELATIONS BETWEEN RELAXATION TIME SPECTRUM AND MELT SPINNING BEHAVIOR OF POLYPROPYLENE. Ö1: CALCULATION OF THE RELAXATION SPECTRUM AS A LOG-NORMAL DISTRIBUTION AND INFLUENCE OF THE MOLECULAR PARAMETERS", POLYMER ENGINEERING AND SCIENCE, BROOKFIELD CENTER, US, vol. 35, no. 6, 1 March 1995 (1995-03-01), pages 513 - 517, XP000500545, ISSN: 0032-3888, DOI: 10.1002/PEN.760350609

• DEALY ET AL: "Linear Viscoelasticity - Fundamentals", 1 January 2006, STRUCTURE AND RHEOLOGY OF MOLTEN POLYMERS : FROM STRUCTURE TO FLOW BEHAVIOR AND BACK AGAIN, HANSER, DE, PAGE(S) 91 - 130, ISBN: 978-3-446-21771-3, XP009191095

## Description

### FIELD

Embodiments of the present disclosure generally relate to artificial turf filaments, articles incorporating artificial turf filaments, and their manufacture.

### BACKGROUND

Synthetic or artificial turfs are increasingly being used as an alternative to natural grass turf for use on sport athletic fields, playgrounds, landscaping, and in other leisure applications. To produce an artificial turf, turf yarns may be extruded, and then tufted through a primary backing. A secondary backing may be applied to "glue" the turf yarn to the primary backing. The extruded turf yarns may have different yarn profiles. That is, various turf yarn cross-sectional shapes and/or thicknesses may be used, which can have a strong impact on the optical appearance of the yarns as well as on their performance during the assembly process and life of the artificial turf.

In addition, during post-extrusion processing, high temperature (> 100°C) ovens may be used causing turf yarns across a variety of yarn profiles to relax. This can result in shrinkage and curl issues. If shrinkage is very pronounced, longer yarns may need to be used to maintain the final desired yarn length of the artificial turf. Further, if curl is very pronounced, artificial turf properties like ball roll and ball rebound can be negatively affected.

Accordingly, alternative artificial turf yarns and/or artificial turfs having consistent behavior across different yarn profiles, as well as, consistent low shrinkage and curl across different yarn profiles and during the assembly process are desired.

As such, for example, Document US 2013/190465 describes an ethylene/alpha-olefin interpolymer suitable for use in fiber applications, and fibers made therefrom. The ethylene/alpha-olefin interpolymer has a CDBI of less than 60%, and comprises at least two fractions in crossfractionation of the ethylene/alpha-olefin interpolymer, eluting from 85 DEG C. to 90 DEG C. and from 90 DEG C. to 95 DEG C., comprising a weight fraction ratio of >0.68 and a molecular weight homogeneity index of greater than 0.65;; wherein the weight fraction ratio is the ratio of the weight of polymer in each fraction divided by the weight of polymer eluting between 95 DEG C. and 100 DEG C. and the molecular weight homogeneity index is the ratio of the weight average molecular weight of the polymer in the fraction divided by the weight average molecular weight of the polymer eluting between 95 DEG C. and 100 DEG C., and wherein the ethylene/alpha-olefin interpolymer has a density in the range of from 0.920 to 0.965 g/cm3, and a melt index (I2) in the range of from 0.5 to 100 g/10 minutes, and melt flow ratio (I10/I2) in the range of from 5.8 to 8.

Document EP 2752509 describes an artificial turf comprising a turf yarn prepared from an ethylene-based polymer composition comprising less than or equal to 100 percent by weight of the units derived from ethylene; and less than 30 percent by weight of units derived from one or more ±-olefin comonomers; wherein said ethylene-based polymer composition is characterized by having a Comonomer Distribution Constant of equal to or greater than 40, a vinyl unsaturation of less than 100 vinyls per one million carbon atoms present in the backbone of the ethylene-based polymer composition; a zero shear viscosity ratio (ZSVR) equal to or greater than 1.75; a density in the range of 0.915 to 0.930 g/cm 3 , a melt index (I 2 ) in the range of from 0.8 to 5 g/10 minutes, a molecular weight distribution (M w /M n ) in the range of from 2 to 3.6, and a molecular weight distribution (M z /M w ) equal to or less than 3; and wherein the turf yarn exhibits one or more of the following properties (a) shrink of less than 4.8 %, and (b) curl of less than 0.5 is provided.

Document WO 2011/134897 describes a polymer filament or fiber comprising a polyethylene material (I) having the following features: a) a density of 0.900 g/cm3 or higher; b) a MI21 value of 25 g/10 min.; c) a MFR value from 25 to 60; the said fiber being stretched by drawing with a draw ratio from 1.5 to 10.

Document WO 2005/052010 describes A Ziegler-Natta catalyst composition comprising a solid mixture formed by halogenation of: A1) a spray-dried catalyst precursor comprising the reaction product of a magnesium compound, a non-metallocene titanium compound, and at least one non-metallocene compound of a transition metal other than titanium, with A2) an organoaluminium halide halogenating agent, a method of preparing, precursors for use therein, and olefin polymerization processes using the same.

### SUMMARY

Disclosed in embodiments herein are the uses of an ethylene-based polymer for obtaining artificial turf filaments. The artificial turf filaments comprise an ethylene-based polymer, wherein the ethylene-based polymer comprises greater than 50 wt.% of the units derived from ethylene and less than 30 wt.% of the units derived from one or more alpha-olefin comonomers; wherein the ethylene-based polymer comprises the reaction product of ethylene and one or more alpha-olefin comonomers in the presence of a catalyst composition comprising a multi-metallic procatalyst via solution polymerization, wherein the multi-metallic procatalyst is at least tri-metallic; and wherein the ethylene-based polymer is characterized by: (a) a melt flow ratio, $I_{10}/I_2$, of less than 7.5, wherein $I_{10}$ is measured according to ASTM D1238 (10 kg @ 190°C) and $I_2$ is measured according to ASTM D1238 (2.16 kg @ 190°C); .

(b) a melt index, $I_2$, measured according to ASTM D 1238 (2.16 kg @ 190°C), of from 0.5 to 5 g/10 min; (c) a density (measured according to ASTM D792) from 0.905 to 0.940 g/cm$^3$; or (d) a molecular weight distribution (Mw/Mn) of from 2.5 to 3.5.

Further disclosed in embodiments herein are methods of manufacturing an artificial turf filament. The methods comprise providing an ethylene-based polymer, wherein the ethylene-based polymer comprises greater than 50 wt.% of the units derived from ethylene and less than 30 wt.% of the units derived from one or more alpha-olefin comonomers, and is characterized by a melt flow ratio, $I_{10}/I_2$, of less than 7.5, wherein $I_{10}$ is measured according to ASTM D1238 (10 kg @ 190°C) and $I_2$ is measured according to ASTM D1238 (2.16 kg @ 190°C); and extruding the ethylene-based polymer into an artificial turf filament.

Even further disclosed in embodiments herein are artificial turfs. The artificial turfs comprise a primary backing having a top side and a bottom side; and at least one artificial turf filament; wherein the at least one artificial turf filament is affixed to the primary backing such that the at least one artificial turf filament provides a tufted face extending outwardly from the top side of the primary backing. The artificial turf filament comprises an ethylene-based polymer, wherein the ethylene-based polymer comprises either: (a) greater than 50 wt.% of the units derived from ethylene and less than 30 wt.% of the units derived from one or more alpha-olefin comonomers, and is characterized by a melt flow ratio, $I_{10}/I_2$, of less than 7.5, wherein $I_{10}$ is measured according to ASTM D1238 (10 kg @ 190°C) and $I_2$ is measured according to ASTM D1238 (2.16 kg @ 190°C); or (b) the reaction product of ethylene and one or more alpha-olefin comonomers in the presence of a catalyst composition comprising a multi-metallic procatalyst via solution polymerization, and is characterized by one or more of the following properties: (i) a melt index, $I_2$, measured according to ASTM D 1238 (2.16 kg @ 190°C), of from 0.5 to 5 g/10 min; (ii) a density (measured according to ASTM D792) from 0.905 to 0.940 g/cm$^3$; (iii) a melt flow ratio, $I_{10}/I_2$, of less than 7.5; or (iv) a molecular weight distribution (Mw/Mn) of from 2.5 to 3.5.

Even further disclosed in embodiments herein are methods of manufacturing artificial turfs. The methods comprise providing at least one artificial turf filament; and affixing the at least one artificial turf filament to a primary backing such that that at least one artificial turf filament provides a tufted face extending outwardly from a top side of the primary backing. The at least one artificial turf filament comprises an ethylene-based polymer, wherein the ethylene-based polymer comprises either: (a) greater than 50 wt.% of the units derived from ethylene and less than 30 wt.% of the units derived from one or more alpha-olefin comonomers, and is characterized by a melt flow ratio, $I_{10}/I_2$, of less than 7.5, wherein $I_{10}$ is measured according to ASTM D1238 (10 kg @ 190°C) and $I_2$ is measured according to ASTM D1238 (2.16 kg @ 190°C); or (b) the reaction product of ethylene and one or more alpha-olefin comonomers in the presence of a catalyst composition comprising a multi-metallic procatalyst via solution polymerization, and is characterized by one or more of the following properties: (i) a melt index, $I_2$, measured according to ASTM D 1238 (2.16 kg @ 190°C), of from 0.5 to 5 g/10 min; (ii) a density (measured according to ASTM D792) from 0.905 to 0.940 g/cm$^3$; (iii) a melt flow ratio, $I_{10}/I_2$, of less than 7.5; or (iv) a molecular weight distribution (Mw/Mn) of from 2.5 to 3.5.

The present invention relates to a method of manufacturing an artificial turf filament, as defined in claim 1. Preferred embodiments are defined in dependent claims 2 and 3.

Additional features and advantages of the embodiments will be set forth in the detailed description which follows, and in part will be readily apparent to those skilled in the art from that description or recognized by practicing the embodiments described herein, including the detailed description which follows, the claims, as well as the appended drawings.

It is to be understood that both the foregoing and the following description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

**BRIEF DESCRIPTION OF THE DRAWINGS**

FIG. 1 pictorially depicts a cutaway view of an artificial turf according to one or more embodiments shown and described herein.

FIG. 2 pictorially depicts die profiles used to make inventive and comparative artificial turf filaments.

FIG. 3 pictorially depicts an exemplary monofilament extrusion line that may be used to produce the inventive and comparative artificial turf filaments.

## DETAILED DESCRIPTION

Reference will now be made in detail to embodiments of artificial turf filaments, artificial turfs incorporating artificial turf filaments, and method of making artificial turf filaments and artificial turfs, characteristics of which are illustrated in the accompanying drawings. As used herein, "filament" refers to monofilaments, multifilaments, extruded films, fibers, yarns, such as, for example, tape yarns, fibrillated tape yarn, slit-film yarn, continuous ribbon, and/or other fibrous materials used to form synthetic grass blades or strands of an artificial turf field.

Artificial Turf Filaments

The artificial turf filaments described herein comprise an ethylene-based polymer. In some embodiments, the ethylene-based polymer comprises greater than 50 wt.% of the units derived from ethylene and less than 30 wt.% of the units derived from one or more alpha-olefin comonomers; wherein the ethylene-based polymer comprises the reaction product of ethylene and one or more alpha-olefin comonomers in the presence of a catalyst composition comprising a multi-metallic procatalyst via solution polymerization, wherein the multi-metallic procatalyst is at least tri-metallic; and wherein the ethylene-based polymer is characterized by: (a) a melt flow ratio, I10/I2, of less than 7.5, wherein I10 is measured according to ASTM D1238 (10 kg @ 190°C) and I2 is measured according to ASTM D1238 (2.16 kg @ 190°C); (b) a melt index, I2, measured according to ASTM D 1238 (2.16 kg @ 190°C), of from 0.5 to 5 g/10 min; (c) a density (measured according to ASTM D792) from 0.905 to 0.940 g/cm3; or (d) a molecular weight distribution (Mw/Mn) of from 2.5 to 3.5.

The ethylene-based polymer comprises ethylene homopolymers, interpolymers of ethylene and at least one comonomer, and blends thereof. In the method according to the invention, the ethylene-based polymer comprises the reaction product of ethylene and one or more alpha-olefin comonomers. The ethylene-based polymer comprises greater than 50 wt.% of the units derived from ethylene and less than 30 wt.% of the units derived from one or more alpha-olefin comonomers. In some embodiments, the ethylene-based polymer comprises (a) greater than or equal to 55%, for example, greater than or equal to 60%, greater than or equal to 65%, greater than or equal to 70%, greater than or equal to 75%, greater than or equal to 80%, greater than or equal to 85%, greater than or equal to 90%, greater than or equal to 92%, greater than or equal to 95%, greater than or equal to 97%, greater than or equal to 98%, greater than or equal to 99%, greater than or equal to 99.5%, from greater than 50% to 99%, from greater than 50% to 97%, from greater than 50% to 94%, from greater than 50% to 90%, from 70% to 99.5%, from 70% to 99%, from 70% to 97% from 70% to 94%, from 80% to 99.5%, from 80% to 99%, from 80% to 97%, from 80% to 94%, from 80% to 90%, from 85% to 99.5%, from 85% to 99%, from 85% to 97%, from 88% to 99.9%, 88% to 99.7%, from 88% to 99.5%, from 88% to 99%, from 88% to 98%, from 88% to 97%, from 88% to 95%, from 88% to 94%, from 90% to 99.9%, from 90% to 99.5% from 90% to 99%, from 90% to 97%, from 90% to 95%, from 93% to 99.9%, from 93% to 99.5% from 93% to 99%, or from 93% to 97%, by weight, of the units derived from ethylene; and (b) optionally, less than 30 percent, for example, less than 25 percent, or less than 20 percent, less than 18%, less than 15%, less than 12%, less than 10%, less than 8%, less than 5%, less than 4%, less than 3%, less than 2%, less than 1%, from 0.1 to 20 %, from 0.1 to 15 %, 0.1 to 12%, 0.1 to 10%, 0.1 to 8%, 0.1 to 5%, 0.1 to 3%, 0.1 to 2%, 0.5 to 12%, 0.5 to 10%, 0.5 to 8%, 0.5 to 5%, 0.5 to 3%, 0.5 to 2.5%, 1 to 10%, 1 to 8%, 1 to 5%, 1 to 3%, 2 to 10%, 2 to 8%, 2 to 5%, 3.5 to 12%, 3.5 to 10%, 3.5 to 8%, 3.5% to 7%, or 4 to 12%, 4 to 10%, 4 to 8%, or 4 to 7%, by weight, of units derived from one or more a-olefin comonomers. The term "ethylene-based polymer" refers to a polymer that contains more than 50 weight percent polymerized ethylene monomer (based on the total amount of polymerizable monomers) and, optionally, may contain at least one comonomer. The comonomer content may be measured using any suitable technique, such as techniques based on nuclear magnetic resonance ("NMR") spectroscopy, and, for example, by 13C NMR analysis as described in U.S. Patent 7,498,282, which is incorporated herein by reference.

Suitable comonomers may include alpha-olefin comonomers, typically having no more than 20 carbon atoms. The one or more alpha-olefins may be selected from the group consisting of C3-C20 acetylenically unsaturated monomers and C4-C18 diolefins. Those skilled in the art will understand that the selected monomers are desirably those that do not destroy conventional Ziegler-Natta catalysts. For example, the alpha-olefin comonomers may have 3 to 10 carbon atoms, or 3 to 8 carbon atoms. Exemplary alpha-olefin comonomers include, but are not limited to, propylene, 1-butene, 1-pentene, 1-hexene, 1-heptene, 1-octene, 1-nonene, 1-decene, and 4-methyl-1-pentene. The one or more alpha-olefin comonomers may, for example, be selected from the group consisting of propylene, 1-butene, 1-hexene, and 1-octene; or in the alternative, from the group consisting of 1-butene, 1-hexene and 1-octene. In some embodiments, the ethylene-based polymer comprises greater than 0 wt.% and less than 30 wt.% of units derived from one or more of octene, hexene, or butene comonomers.

In some embodiments herein, the ethylene-based polymer may comprise the reaction product of ethylene and optionally one or more alpha-olefin comonomers in the presence of a catalyst composition comprising a multi-metallic procatalyst via solution, slurry, or gas phase polymerization. The solution, slurry, or gas phase polymerization may occur in a single reactor, or alternatively, in a dual reactor system wherein the same product is produced in each of the dual reactors.

As previously noted, the ethylene-based polymer is produced in the presence of a catalyst composition comprising a multi-metallic procatalyst. The multi-metallic procatalyst used in producing the reaction product is at least tri-metallic, but may also include more than three transition metals, and thus may, in some embodiments, be defined more comprehensively as multi-metallic. These three or more transition metals are selected prior to production of the catalyst. In some embodiments, the multi-metal catalyst comprises titanium as one element.

The catalyst compositions may be prepared beginning first with preparation of a conditioned magnesium halide-based support. Preparation of a conditioned magnesium halide-based support begins with selecting an organomagnesium compound or a complex including an organomagnesium compound. Such a compound or complex may be soluble in an inert hydrocarbon diluent. The concentrations of components may be such that when the active halide, such as a metallic or non-metallic halide, and the magnesium complex are combined, the resultant slurry is from about 0.005 to about 0.2 molar (moles/liter) with respect to magnesium. Examples of suitable inert organic diluents may include liquefied ethane, propane, isobutane, n-butane, n-hexane, the various isomeric hexanes, isooctane, paraffinic mixtures of alkanes having from 5 to 10 carbon atoms, cyclohexane, methylcyclopentane, dimethylcyclohexane, dodecane, industrial solvents composed of saturated or aromatic hydrocarbons such as kerosene, naphthas, and combinations thereof, especially when freed of any olefin compounds and other impurities, and especially those having boiling points in the range from about -50°C to about 200°C. Also included as suitable inert diluents are ethylbenzene, cumene, decalin and combinations thereof.

Suitable organomagnesium compounds and complexes may include, for example, magnesium C2-C8 alkyls and aryls, magnesium alkoxides and aryloxides, carboxylated magnesium alkoxides, and carboxylated magnesium aryloxides. In some embodiments, sources of magnesium moieties may include the magnesium C2-C8 alkyls and C1-C4 alkoxides. The organomagnesium compounds or complexes may be reacted with a metallic or non-metallic halide source, such as a chloride, bromide, iodide, or fluoride, in order to make a magnesium halide compound under suitable conditions. Such conditions may include a temperature ranging from -25°C to 100°C, or, in some embodiments, from 0°C to 50°C; a time ranging from 1 to 12 hours, or, in some embodiments, from 4 to 6 hours; or both. The result is a magnesium halide-based support.

The magnesium halide support is then reacted with a selected conditioning compound containing an element selected from the group consisting of boron, aluminum, gallium, indium and tellurium, under conditions suitable to form a conditioned magnesium halide support. This compound and the magnesium halide support are then brought into contact under conditions sufficient to result in a conditioned magnesium halide support. Such conditions may include a temperature ranging from 0°C to 50°C, or, in some embodiments, from 25°C to 35°C; a time ranging from 4 to 24 hours, or, in some embodiments, from 6 to 12 hours; or both. Without wishing to be bound by any theory of mechanism, it is believed that this aging (or conditioning) serves to facilitate or enhance adsorption of additional metals onto the support.

Once the conditioned support is prepared and suitably aged, it is brought into contact with a titanium compound. In certain embodiments, titanium halides or alkoxides, or combinations thereof, may be selected. Conditions may include a temperature within the range from 0°C to 50°C, or, in some embodiments, from 25°C to 35°C; a time from 3 hours to 24 hours, or, in some embodiments, from 6 hours to 12 hours; or both. The result of this step is adsorption of at least a portion of the titanium compound onto the conditioned magnesium halide support.

Finally, at least two additional metals, referred to herein as "the second metal" and "the third metal" for convenience, will also be adsorbed onto the magnesium-based support. The "second metal" and the "third metal" are independently selected from zirconium (Zr), hafnium (Hf), vanadium (V), niobium (Nb), tantalum (Ta), chromium (Cr), molybdenum (Mo), and tungsten (W). In the method according to the present invention, the multi-metallic procatalyst comprises at least zirconium and vanadium. These metals may be incorporated in any of a variety of ways known to those skilled in the art. For example, the conditioned magnesium-based halide support including titanium may be contacted with the selected second and third metals in, for e.g., a liquid phase, such as by using an appropriate hydrocarbon solvent. Such contact can be suitable to ensure deposition of the additional metals to form what may now be referred to as the "procatalyst," which is a multi-metallic procatalyst.

The multi-metallic procatalyst has a molar ratio constitution that is specific, and which is believed to be an important feature in ensuring the desirable polymer properties that may be attributed to the catalyst made from the procatalyst. Specifically, the procatalyst desirably exhibits a molar ratio of the magnesium to a combination of the titanium and the second and third metals that ranges from 30:1 to 5:1 under conditions sufficient to form a multi-metallic procatalyst. Thus, the overall molar ratio of magnesium to titanium ranges from 8:1 to 80:1.

Once the procatalyst has been formed, it may be used to form a final catalyst by combining it with a cocatalyst consisting of at least one organometallic compound such as an alkyl or haloalkyl of aluminum, an alkylaluminum halide, a Grignard reagent, an alkali metal aluminum hydride, an alkali metal borohydride, an alkali metal hydride, an alkaline earth metal hydride, or the like. The formation of the final catalyst from the reaction of the procatalyst and the organometallic cocatalyst may be carried out in situ, or just prior to entering the polymerization reactor. The combination of the cocatalyst and the procatalyst may occur under a wide variety of conditions, such as, for example, by contacting them under an inert atmosphere such as nitrogen, argon or other inert gas at temperatures in the range from 0°C to 250°C, or, in some embodiments, from 15°C to 200°C. In the preparation of the catalytic reaction product, it is not necessary to separate hydrocarbon soluble components from hydrocarbon insoluble components. Time for contact between the procatalyst and cocatalyst may range, for example, from 0 to 240 seconds, or, in some embodiments, from 5 to 120 seconds. Various combinations of these conditions may be employed.

Once the catalyst compositions of the invention have been prepared, they are suitable for use in olefin polymerizations. In some embodiments, the catalyst compositions are suitable for use in slurry polymerizations, wherein the polymer is not dissolved in the carrier, for use in gas phase polymerizations, or for use in solution polymerizations, wherein the temperature is high enough to solubilize the polymer in the carrier), or the like, to prepare the ethylene-based polymers. In the method according to the present invention, olefin polymerization is carried out via solution polymerization. In general, this may be carried out generally in a reaction medium, such as an isoparaffin or other aliphatic hydrocarbon diluents, with the olefin, or a combination of olefins, being brought into contact with the reaction medium in the presence of the selected catalyst, as the sole catalyst in some embodiments. Conditions may be any that are suitable, and a molecular weight regulator, frequently hydrogen, is often present in the reaction vessel in order to suppress formation of undesirably high molecular weight polymers. Additional information on preparation and use of the multi-metal catalysts are found in commonly owned, copending U.S. Application 2014/080970 A1.

Polymerization is effected by adding a catalytic amount of the multi-metal catalyst composition to a polymerization reactor containing the selected alpha-olefin comonomer, or vice versa. The polymerization reactor is maintained at temperatures in the range from 150°C to 300°C, or at solution polymerization temperatures, e.g., from 150°C to 250°C, for a residence time, in certain non-limiting embodiments, ranging from 5 minutes to 20 minutes. Longer or shorter residence times may alternatively be employed. It is generally desirable to carry out the polymerization in the absence of moisture and oxygen and in the presence of a catalytic amount of the catalytic reaction product that may be within the range of from 0.0001 to about 0.01 milligram-atoms transition metal per liter of diluent. It is understood, however, that the most advantageous catalyst concentration will depend upon polymerization conditions such as temperature, pressure, solvent and the presence of catalyst poisons and that the foregoing range is given for illustrative purposes of one particular but non-limiting embodiment only.

For example, pressures may be relatively low, e.g., from 150 to 3,000 psig (1.0 to 20.7 MPa), from 250 to 1,000 psig (1.7 to 6.9 MPa), or from 450 to 800 psig (3.1 to 5.5 MPa). However, polymerization within the scope of the invention can occur at pressures from atmospheric up to pressures determined by the capabilities of the polymerization equipment.

Generally, in the polymerization process, a carrier which may be an inert organic diluent or solvent or excess monomer is generally employed. Care is desirably taken to avoid oversaturation of the solvent with polymer. If such saturation occurs before the catalyst becomes depleted, the full efficiency of the catalyst may not be realized. In some embodiments, it may be preferable that the amount of polymer in the carrier not exceed 30 percent, based on the total weight of the reaction mixture. It may also be very desirable to stir the polymerization components in order to attain desirable levels of temperature control and to enhance the uniformity of the polymerization throughout the polymerization zone. For example, in the case of relatively more rapid reactions with relatively active catalysts, means may be provided for refluxing monomer and diluent, if diluent is included, thereby removing some of the heat of reaction. In any event, adequate means should be provided for dissipating the exothermic heat of polymerization. Polymerization may be effected in a batch manner, or in a continuous manner, such as, for example, by passing the reaction mixture through an elongated reaction tube which is contacted externally with suitable cooling medium to maintain the desired reaction temperature, or by passing the reaction mixture through an equilibrium overflow reactor or a series of the same.

In order to enhance catalyst efficiency in the polymerization of ethylene, it may also be desirable to maintain a certain ethylene concentration in the diluents in order to ensure reactor stability and/or optimize catalyst efficiency. In some embodiments this may include a ratio of solvent to ethylene ranging from 1:2 to 1:8, or 1:3 to 1:5. To achieve this when an excess of ethylene is fed into the system, a portion of the ethylene can be vented.

Hydrogen is often employed in the practice of this invention for the purpose of lowering the molecular weight of the resultant polymer. It may be beneficial to employ hydrogen in the polymerization mixture in concentrations ranging from 0.001 to 1 mole per mole of monomer. The larger amounts of hydrogen within this range may be useful to produce generally lower molecular weight polymer. It is generally known to those skilled in the art that hydrogen may be added to the polymerization vessel either with a monomer stream, or separately therefrom, before, during or after addition of the monomer to the polymerization vessel. However, in some embodiments it may be desirable to ensure that the hydrogen is added either before or during addition of the catalyst, in the range of from 200,000 to 3 million grams of polymer per gram of Ti, such as, for example, from 600,000 to 2 million grams of polymer per gram of Ti.

The resulting ethylene-based polymer may be effectively recovered from the polymerization mixture by driving off unreacted monomer and diluent, where such is employed. No further removal of impurities is required. The resultant ethylene-based polymer may contain small amounts of catalyst residue and also possess a relatively narrow molecular weight distribution. The resulting ethylene-based polymer may further be melt screened. Subsequent to the melting process in the extruder, the molten composition is passed through one or more active screens, positioned in series of more than one, with each active screen having a micron retention size of from about 2 $\mu$m to about 400 $\mu$m (2 to 4 X $10^{-5}$ m), about

2 $\mu$m to about 300 $\mu$m (2 to 3 X $10^{-5}$ m), or from about 2 $\mu$m to about 70 $\mu$m (2 to 7 X $10^{-6}$ m), at a mass flux of about 5 to about 100 lb/hr/in$^2$ (1.0 to about 20 kg/s/m$^2$). Melt screening is further described in U.S. Patent No. 6,485,662, which is incorporated herein by reference to the extent that it discloses melt screening.

In embodiments herein, the ethylene-based polymer may comprise greater than or equal to 1 parts by combined weight of at least three different metal residues remaining from the multi-metallic polymerization catalyst, metal catalyst residual, (i.e., one catalyst giving rise to the three different residual metals in the polyethylene composition) per one million parts of the ethylene-based polymer, where such metals are selected from the group consisting of titanium, zirconium, hafnium, vanadium, niobium, tantalum, chromium, molybdenum, tungsten, and combinations thereof, and wherein each metal residual is present in an amount of at least 0.2 ppm, for example, in the range of from 0.2 to 5 ppm. All individual values and subranges from greater than or equal to 0.2 ppm are included herein and disclosed herein; for example, the ethylene-based polymer may further comprise greater than or equal to 2 parts by combined weight of at least three metal residues remaining from the multi-metallic polymerization catalyst per one million parts of the ethylene-based polymer.

In some embodiments, the ethylene-based polymer comprises at least 0.75 ppm of V (Vanadium). All individual values and subranges from at least 0.75 ppm of V are included and disclosed herein; for example the lower limit of the V in the ethylene-based polymer may be 0.75, 1, 1.1, 1.2, 1.3 or 1.4 ppm to an upper limit of the V in the ethylene-based polymer may be 5, 4, 3, 2, 1.9, 1.8, 1.7, 1.6, 1.5, or 1 ppm. The vanadium catalyst metal residual concentration for the ethylene-based polymer can be measured using the Neuron Activation Method for Metals described below.

In some embodiments, the ethylene-based polymer comprises at least 0.3 ppm of Zr (Zirconium). All individual values and subranges of at least 0.3 ppm of Zr are included and disclosed herein; for example the lower limit of the Zr in the ethylene-based polymer may be 0.3, 0.4, 0.5, 0.6 or 0.7 ppm. In yet another embodiment, the upper limit of the Zr in the ethylene-based polymer may be 5, 4, 3, 2, 1, 0.9, 0.8 or 0.7 ppm. The zirconium catalyst metal residual concentration for the ethylene-based polymer can be measured using the Neuron Activation Method for Metals described below.

The ethylene-based polymer has a density of 0.905 g/cc to 0.940 g/cc. All individual values and subranges of at least 0.905 g/cc to 0.940 g/cc are included and disclosed herein. For example, in some embodiments, the polyethylene has a density of 0.905 to 0.935 g/cc, 0.905 to 0.930 g/cc, 0.905 to 0.925 g/cc, 0.910 g/cc to 0.935 g/cc, 0.910 to 0.930 g/cc, 0.910 to 0.927 g/cc, 0.910 to 0.925 g/cc, 0.915 to 0.930 g/cc, or 0.915 to 0.925 g/cc. Density is measured in accordance with ASTM D792.

The ethylene-based polymer has a melt index, I2, of 0.5 g/10 min to 5 g/10 min. All individual values and subranges of at least 0.5 g/10 min to 5 g/10 min are included and disclosed herein. For example, in some embodiments, the ethylene-based polymer may have a melt index, I2, of 0.5 g/10 min to 4.5 g/10 min, 0.5 g/10 min to 4.0 g/10 min, 0.5 g/10 min to 3.5 g/10 min. In other embodiments, the ethylene-based polymer may have a melt index, I2, 1 g/10 min to 5 g/10 min, 1 g/10 min to 4.5 g/10 min, or 1 g/10 min to 4 g/10 min. Melt index, I2, is measured in accordance with ASTM D1238 (190°C. and 2.16 kg).

In embodiments herein, the ethylene-based polymer may have a melt flow ratio, I10/I2, of less than 7.5. All individual values and subranges of less than 7.5 are included and disclosed herein. For example, in some embodiments, the ethylene-based polymer may have a melt flow ratio, I10/I2, of less than 7.4, 7.3, 7.2, 7.1 or 7.0. In other embodiments, the ethylene-based polymer may have a melt flow ratio, I10/I2, of from 1.0 to 7.5, 2.0 to 7.5, 3.0 to 7.5, 4.0 to 7.5, 5.0 to 7.5, 5.5 to 7.5, 6.0 to 7.5, 6.5 to 7.5, 6.5 to 7.4, 5.5 to 7.4, 5.5 to 7.2, 6.0 to 7.4, 6.0 to 7.2, 6.2 to 7.4, 6.2 to 7.2, 6.5 to 7.4, 6.5 to 7.2. In the method according to the present invention, the melt flow ratio, I10/I2, is from 6.5 to 7.4. Melt index, I10, is measured in accordance with ASTM D1238 (190°C. and 10.0 kg).

The ethylene-based polymer has a molecular weight distribution (Mw/Mn) of from 2.5 to 3.5. All individual values and subranges of from 2.5 to 3.5 are included and disclosed herein. For example, the ethylene-based polymer may have an Mw/Mn ratio from a lower limit of 2.5, 2.7., 2.9, 3.1, 3.3 or 3.4 to an upper limit of 2.6, 2.8, 3, 3.2, 3.4, or 3.5. In some embodiments, the ethylene-based polymer may have an Mw/Mn ratio of from 2.7 to 3.5, 3 to 3.5, 2.8 to 3.1, or 2.5 to 3.4. The Mw/Mn ratio may be determined by conventional gel permeation chromatography (GPC) as outlined below.

In embodiments herein, the ethylene-based polymer may have a composition distribution breadth index, CDBI, of less than 70%. All individual values and subranges of less than 70% are included and disclosed herein. For example, in some embodiments, the ethylene-based polymer may have a CDBI of 69, 68, 67.5%, 65%, 63%, 60%, 58%, 55%, 53%, 51%, 50.5%, or 50.0%.

The CDBI may be defined as the weight percent of the polymer molecules having a co-monomer content within 50 percent of the median total molar co-monomer content. The CDBI of linear polyethylene, which does not contain a comonomer, is defined to be 100%. The CDBI of a copolymer is readily calculated from data obtained from crystallization elution fractionation ("CEF") as described below. Unless otherwise indicated, terms such as "comonomer content", "average comonomer content" and the like refer to the bulk comonomer content of the indicated interpolymer blend, blend component or fraction on a molar basis.

In embodiments describe herein not being part of the present invention, the ethylene-based polymer may have a relaxation spectrum index (RSI) of less than 5.5. All individual values and subranges of less than 5.5 are included and disclosed herein. For example, in some embodiments, the ethylene-based polymer may have a relaxation spectrum index of less than 5.3, 5.1, 5.0, 4.8, or 4.6. In other embodiments, the ethylene-based polymer may have a relaxation spectrum index of 1.0 to 5.5, 1.5 to 5.5, 2.0 to 5.5, 2.5 to 5.5, 3.0 to 5.5, 3.5 to 5.5, or 4.0 to 5.5. In further embodiments, the ethylene-based polymer may have a relaxation spectrum index of 1.0 to 5.0, 1.0 to 4.5, 1.5 to 4.5, or 2.0 to 4.5. RSI of the ethylene-based polymer is in dimensionless units and may be determined as outlined below.

Without being bound by theory, it is believed that RSI is a sensitive indicator of molecular structure, especially where those differences affect the breadth of the relaxation spectrum. Because RSI is sensitive to such parameters as a polymer's molecular weight distribution, molecular weight, melt flow rate, and long chain branching, it is a reliable indicator of the processability and relaxation of a polymer. Thus, it is believed that the ethylene-based polymers described herein offer performance advantages in that the polymer's unique rheological properties impart superior melt strength and shear-thinning behavior, which can allow for consistent shrink and curl performance across different extrusion profiles in manufacturing filaments.

In embodiments described herein not being part of the present invention, the ethylene-based polymer may have a normalized relaxation spectrum index (nRSI) of less than 10.0. The nRSI is further described in U.S. 6, 159, 617. Without being bound by theory, it is believed that by normalizing the effects that melt index may have on a polymer's unique rheological properties, a particularly distinct molecular structure can be shown thereby differentiating one polymer from another. All individual values and subranges of less than 10.0 are included and disclosed herein. For example, in some embodiments, the ethylene-based polymer may have an nRSI of less than 9.8, 9.6, 9.4, 9.2, or 9.0. In other embodiments, the ethylene-based polymer may have an nRSI of 7.0 to less than 10.0, 7.0 to 9.8, 7.0 to 9.6, 7.0 to 9.4, 7.0 to 9.2, or 7.0 to 9.0. The nRSI of the ethylene-based polymer may be determined as outlined below.

In embodiments herein, the ethylene-based polymer may be further characterized by one or more of the following properties: melt index (I2), melt flow ratio (I10/I2), density, Mw/Mn, CDBI, RSI, or nRSI, as previously described herein. In some embodiments, the ethylene-based polymer is further characterized by one or more of the following properties: melt index (I2), melt flow ratio (I10/I2), or density. In other embodiments, the ethylene-based polymer is further characterized by one or more of the following properties: (a) a melt index, I2, measured according to ASTM D 1238 (2.16 kg @190°C), of from 0.5 to 5 g/10 min; (b) a density (measured according to ASTM D792) from 0.905 to 0.940 g/cm3; or (c) a melt flow ratio, I10/I2, of less than 7.5.

In embodiments herein, the artificial turf filaments may exhibit a shrink of less than 5.5%. All individual values and subranges of less than 5.5% are included and disclosed herein. In the method according to the present invention, the artificial turf filaments have a shrink of less than 5.5%. For example, in some embodiments, the artificial turf filaments may exhibit a shrink lower than 5.3%, 5.2%, 5.0%. The shrink may be determined by submerging 1m of yarn in a heated oil bath at 90°C for 20 seconds.

In embodiments herein, the artificial turf filaments may further include one or more additives. Nonlimiting examples of suitable additives include antioxidants, pigments, colorants, UV stabilizers, UV absorbers, curing agents, cross linking co-agents, boosters and retardants, processing aids, fillers, coupling agents, ultraviolet absorbers or stabilizers, antistatic agents, nucleating agents, slip agents, plasticizers, lubricants, viscosity control agents, tackifiers, antiblocking agents, surfactants, extender oils, acid scavengers, and metal deactivators. Additives can be used in amounts ranging from less than about 0.01 wt % to more than about 10 wt % based on the weight of the composition.

Artificial Turf Filament Process

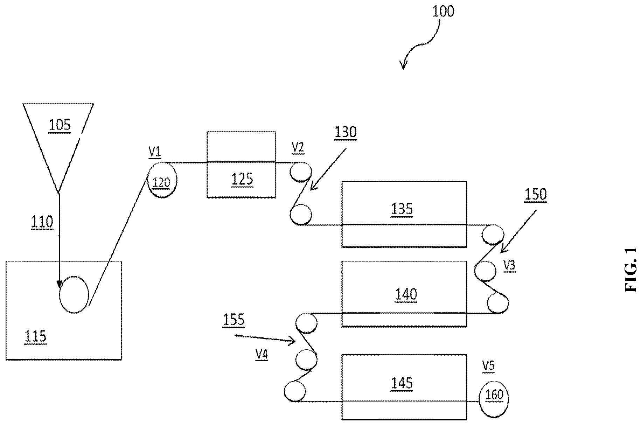

The artificial turf filaments described herein may be made using any appropriate process for the production of artificial turf filament from polymer compositions as the artificial turf filaments described herein are process independent. Referring to FIG. 1, the following describes one such exemplary process **100** that may be used.

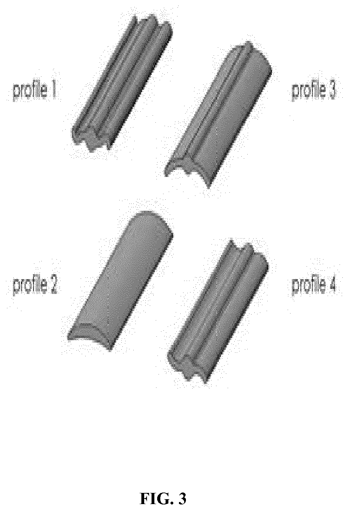

Artificial turf filaments may be made by extrusion. Suitable artificial turf filament extruders may be equipped with a single PE/PP general purpose screw and a melt pump ("gear pump" or "melt pump") to precisely control the consistency of polymer volume flow into the die **105**. Artificial turf filament dies **105** may have multiple single holes for the individual filaments distributed over a circular or rectangular spinplate. The shape of the holes corresponds to the desired filament cross-section profile, including for example, rectangular, dog-bone, and v-shaped as depicted and described in FIG. 3 below. A standard spinplate has 50 to 160 die holes of specific dimensions. Lines can have output rates from 150 kg/h to 350 kg/h.

The artificial turf filaments **110** may be extruded into a water bath **115** with a die-to-water bath distance of from 16 to 40 mm. Coated guiding bars in the water redirect the filaments **110** towards the first takeoff set of rollers **120**. The linear speed of this first takeoff set of rollers **120** may vary from 15 to 70 m/min. The first takeoff set of rollers **120** can be heated and used to preheat the filaments **110** after the waterbath **115** and before entering the stretching oven **125.** The stretching oven **125** may be a heated air or water bath oven. The filaments **110** may be stretched in the stretching oven **125** to a predetermined stretched ratio. In some embodiments, the stretch ratio is at least 4. In other embodiments, the stretch ratio is at least 4.5, 4.8, 5.0, 5.2, or 5.5. The stretching ratio is the ratio between the speed of the second takeoff set of rollers **130** after the stretching oven and the speed of the first takeoff set of rollers **120** before the stretching oven (V2/V1 as shown in FIG. 1). The second takeoff set of rollers **120** may be run at a different (higher or lower) speed than the first set of rollers **130**.

After the filaments **110** are passed over the second takeoff set of rollers **130,** they are then drawn through a set of three annealing ovens **135, 140,** and **145.** The three annealing ovens **135, 140,** and **145** may be either a hot air oven with co- or countercurrent hot air flow, which can be operated from 50 to 150°C or a hot water-oven, wherein the filaments **110** are oriented at temperatures from 50 to 98°C. At the exit of the first annealing oven **135,** the filaments **110** are passed onto a third set of rollers **150** that may be run at a different (higher or lower) speed than the second set of rollers **130.** The linear velocity ratio of the third set of rollers **150** located after the oven to the second set of rollers **130** located in front of the oven may be referred to as either a stretching or relaxation ratio. At the exit of the second annealing oven **140,** the filaments **110** are passed onto a fourth set of rollers **155** that may be run at a different (higher or lower) speed than the third set of rollers **150.** At the exit of the third annealing oven **145,** the filaments **110** are passed onto a fifth set of rollers **160** that may be run at a different (higher or lower) speed than the fourth set of rollers **155.**

In some embodiments, a method of manufacturing an artificial turf filament comprises providing an ethylene-based polymer as previously described herein, and extruding the ethylene-based polymer into an artificial turf filament. The artificial turf filament may be extruded to a specified width, thickness, and/or cross-sectional shape depending on the physical dimensions of the extruder. As mentioned above, the artificial turf filament can include a monofilament, a multifilament, a film, a fiber, a yarn, such as, for example, tape yarn, fibrillated tape yarn, or slit-film yarn, a continuous ribbon, and/or other fibrous materials used to form synthetic grass blades or strands of an artificial turf field.

The artificial turf filament may optionally undergo further post-extrusion processing (e.g., annealing, cutting, etc.).

Artificial Turf

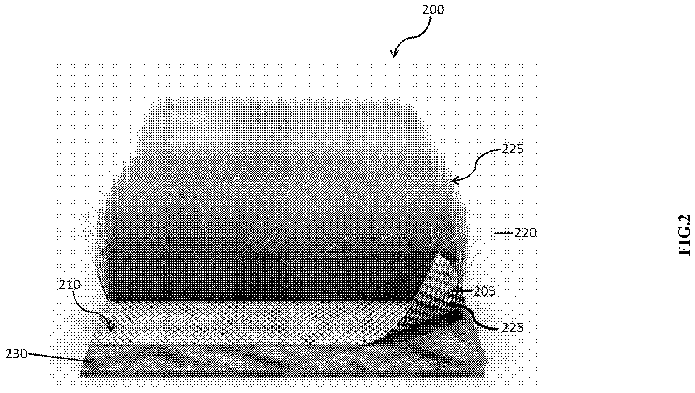

One or more embodiments of the artificial turf filaments described herein may be used to form an artificial turf field. Referring to FIG. 2, depicted is a cutaway view of an artificial turf field **200** according to one or more embodiments shown and/or described herein. The artificial turf field **200** comprises a primary backing **205** having a top side **210** and a bottom side **215;** and at least one artificial turf filament **220** as previously described herein. The at least one artificial turf filament **220** is affixed to the primary backing **205** such that the at least one artificial turf filament **220** provides a tufted face **225** extending outwardly from the top side **210** of the primary backing **205.** As used herein, "affix," "affixed," or "affixing" includes, but is not limited to, coupling, attaching, connecting, fastening, joining, linking or securing one object to another object through a direct or indirect relationship. The tufted face **225** extends from the top side **210** of the primary backing **205,** and can have a cut pile design, where the artificial turf filament loops may be cut, either during tufting or after, to produce a pile of single artificial turf filament ends instead of loops.

The primary backing **205** can include, but is not limited to, woven, knitted, or nonwoven fibrous webs or fabrics made of one or more natural or synthetic fibers or yarns, such as polypropylene, polyethylene, polyamides, polyesters, and rayon. The artificial turf field **200** may further comprise a secondary backing **230** bonded to at least a portion of the bottom side **215** of the primary backing **205** such that the at least one artificial turf filament **220** is affixed in place to the bottom side **215** of the primary backing **205.** The secondary backing **230** may comprise polyurethane (including, for example, polyurethane supplied under the name ENFORCER™ or ENHANCER™ available from The Dow Chemical Company) or latex-based materials, such as, styrene-butadiene latex, or acrylates.

The primary backing **205** and/or secondary backing **230** may have apertures through which moisture can pass. The apertures may be generally annular in configuration and are spread throughout the primary backing **205** and/or secondary backing **230.** Of course, it should be understood that there may be any number of apertures, and the size, shape and location of the apertures may vary depending on the desired features of the artificial turf field **200.**

The artificial turf field **200** may be manufactured by providing at least one artificial turf filament **220** as described herein and affixing the at least one artificial turf filament **220** to a primary backing **205** such that that at least one artificial turf filament **220** provides a tufted face **225** extending outwardly from a top side **210** of the primary backing **205.** The artificial turf field **200** may further be manufactured by bonding a secondary backing **230** to at least a portion of the bottom side **215** of the primary backing **205** such that the at least one artificial turf filament **220** is affixed in place to the bottom side **215** of the primary backing **205.**

The artificial turf field **200** may optionally comprise a shock absorption layer underneath the secondary backing of the artificial turf field. The shock absorption layer can be made from polyurethane, PVC foam plastic or polyurethane foam plastic, a rubber, a closed-cell crosslinked polyethylene foam, a polyurethane underpad having voids, elastomer foams of polyvinyl chloride, polyethylene, polyurethane, and polypropylene. Non-limiting examples of a shock absorption layer are DOW® ENFORCER™ Sport Polyurethane Systems, and DOW® ENHANCER™ Sport Polyurethane Systems.

The artificial turf field **200** may optionally comprise an infill material. Suitable infill materials include, but are not limited to, mixtures of granulated rubber particles like SBR (styrene butadiene rubber) recycled from car tires, EPDM (ethylene-propylene-diene monomer), other vulcanised rubbers or rubber recycled from belts, thermoplastic elastomers (TPEs) and thermoplastic vulcanizates (TPVs).

The artificial turf field **200** may optionally comprise a drainage system. The drainage system allows water to be removed from the artificial turf field and prevents the field from becoming saturated with water. Nonlimiting examples of drainage systems include stone-based drainage systems, EXCELDRAIN™ Sheet 100, EXCELDRAIN™ Sheet 200, AND EXCELDRAIN™ EX-T STRIP (available from American Wick Drain Corp., Monroe, N.C.).

The embodiments described herein may be further illustrated by the following non-limiting examples.

**TEST METHODS**

Density

Density is measured according to ASTM D792.

Melt Index

Melt index, or I2, is measured according to ASTM D1238 at 190°C, 2.16 kg. Melt index, or I10, is measured in accordance with ASTM D1238 at 190°C, 10 kg.

Conventional Gel Permeation Chromatography (GPC)

The gel permeation chromatographic system consists of either a Polymer Laboratories Model PL-210 or a Polymer Laboratories Model PL-220 instrument. The column and carousel compartments are operated at 140°C. Three Polymer Laboratories 10-micron Mixed-B columns are used. The solvent is 1,2,4-trichlorobenzene. The samples are prepared at a concentration of 0.1 grams of polymer in 50 milliliters of solvent containing 200 ppm of butylated hydroxytoluene (BHT). Samples are prepared by agitating lightly for 2 hours at 160° C. The injection volume used is 100 microliters and the flow rate is 1.0 ml/minute.

Calibration of the GPC column set is performed with 21 narrow molecular weight distribution polystyrene standards with molecular weights ranging from 580 to 8,400,000, arranged in 6 "cocktail" mixtures with at least a decade of separation between individual molecular weights. The standards are purchased from Polymer Laboratories (Shropshire, UK). The polystyrene standards are prepared at 0.025 grams in 50 milliliters of solvent for molecular weights equal to or greater than 1,000,000, and 0.05 grams in 50 milliliters of solvent for molecular weights less than 1,000,000. The polystyrene standards are dissolved at 80°C. with gentle agitation for 30 minutes. The narrow standards mixtures are run first and in order of decreasing highest molecular weight component to minimize degradation. The polystyrene standard peak molecular weights are converted to polyethylene molecular weights using the following equation (as described in Williams and Ward, J. Polym. Sci., Polym. Let., 6, 621 (1968)): $M_{polyethylene}=0.4316 \times (M_{polystyrene})$. Polyethylene equivalent molecular weight calculations are performed using Viscotek TriSEC software Version 3.0.

Number-, weight- and z-average molecular weights are calculated according to the following equations:

$$M_n = \frac{\sum^i Wf_i}{\sum^i \left( Wf_i \Big/ M_i \right)}$$

$$M_w = \frac{\sum^i \left( Wf_i * M_i \right)}{\sum^i Wf_i}$$

$$M_z = \frac{\sum^i \left( Wf_i * M_i^2 \right)}{\sum^i Wf_i * M_i}$$

wherein Mn is the number average molecular weight, Mw, is the weight average molecular weight, Mz is the z-average

molecular weight, $Wf_i$ is the weight fraction of the molecules with a molecular weight of $M_i$.

Crystallization Elution Fractionation (CEF)

Comonomer distribution analysis is performed with Crystallization Elution Fractionation (CEF) (PolymerChar, Spain) (Monrabal et al, Macromol. Symp. 257, 71-79 (2007)) equipped with IR-4 detector (PolymerChar, Spain) and two angle light scattering detector Model 2040 (Precision Detectors, currently Agilent Technologies). IR-4 or IR-5 detector is used. A 10 micron guard column of 50X4.6 mm (PolymerLab, currently Agilent Technologies) was installed just before IR-4 or (IR-5) detector in the detector oven. Ortho-dichlorobenzene (ODCB, 99% anhydrous grade) and 2,5-di-tert-butyl-4-methylphenol (BHT, catalogue number B1378-500G, batch number 098K0686) were purchased from Sigma-Aldrich. Silica gel 40 (particle size 0.2~0.5 mm, catalogue number 10181-3) was purchased from EMD Chemicals. The silica gel was dried in a vacuum oven at 160°C for about two hours before use. Eight hundred milligrams of BHT and five grams of silica gel were added to two liters of ODCB. ODCB containing BHT and silica gel" is now referred to as "ODCB." This ODBC was sparged with dried nitrogen (N2) for one hour before use. Dried nitrogen is such that is obtained by passing nitrogen at <90 psig over CaCO3 and 5Å molecular sieves. The resulting nitrogen should have a dew point of approximately -73°C. Sample preparation is done with autosampler at 4 mg/ml (unless otherwise specified) under shaking at 160°C for 2 hours. The injection volume is 300 $\mu$l. The temperature profile of CEF is: crystallization at 3°C/min from 110°C to 30°C, the thermal equilibrium at 30°C for 5 minutes (including Soluble Fraction Elution Time being set as 2 minutes), elution at 3°C/min from 30°C to 140°C. The flow rate during crystallization is 0.052 ml/min. The flow rate during elution is 0.50 ml/min. The data is collected at one data point/second.

The CEF column is packed by the Dow Chemical Company with glass beads at 125 $\mu$m$\pm$ 6% (MO-SCI Specialty Products) with 1/8 inch stainless tubing according to U.S. 2011/0015346 A1. The column outside diameter (OD) is 1/8 inch. The critical parameters needed to duplicate the method include the column internal diameter (ID), and column length (L). The choice of ID and L must be such that when packed with the 125 $\mu$m diameter glass beads, that the liquid internal volume is 2.1 to 2.3 mL. If L is 152 cm, then ID must be 0.206 cm and the wall thickness must be 0.056cm. Different values for L and ID can be used, as long as the glass bead diameter is 125 $\mu$m and the internal liquid volume is between 2.1 and 2.3 mL. Column temperature calibration is performed by using a mixture of NIST Standard Reference Material Linear polyethylene 1475a (1.0mg/ml) and Eicosane (2mg/ml) in ODCB. CEF temperature calibration consists of four steps: (1) Calculating the delay volume defined as the temperature offset between the measured peak elution temperature of Eicosane minus 30.00°C; (2) Subtracting the temperature offset of the elution temperature from CEF raw temperature data. It is noted that this temperature offset is a function of experimental conditions, such as elution temperature, elution flow rate, etc.; (3)Creating a linear calibration line transforming the elution temperature across a range of 30.00°C and 140.00°C so that NIST linear polyethylene 1475a has a peak temperature at 101.0°C, and Eicosane has a peak temperature of 30.0°C, (4) For the soluble fraction measured isothermally at 30°C, the elution temperature is extrapolated linearly by using the elution heating rate of 3°C/min. The reported elution peak temperatures are obtained such that the observed comonomer content calibration curve agrees with those previously reported in U.S. 8,729,200.

Relaxation Spectrum Index

The RSI is determined by first subjecting the polymer to a shear deformation and measuring its response to the deformation using a rheometer. As is known in the art, based on the response of the polymer and the mechanics and geometry of the rheometer used, the relaxation modulus G(t) or the dynamic moduli G'($\omega$) and G"($\omega$) may be determined as functions of time (t) or frequency ($\omega$), respectively. (See J. M. Dealy and K. F. Wissbrun, Melt Rheology and Its Role in Plastics Processing, Van Nostrand Reinhold, 1990, pp. 269-297). The mathematical connection between the dynamic and storage moduli is a Fourier transform integral relation, but one set of data may also be calculated from the other using the well-known relaxation spectrum. (See S. H. Wasserman, J. Rheology, Vol. 39, pp. 601-625 (1995)). Using a classical mechanical model a discrete relaxation spectrum consisting of a series of relaxations or "modes," each with a characteristic intensity or "weight" and relaxation time may be defined. Using such a spectrum, the moduli are re-expressed as:

$$G'(\omega) = \sum_{i=1}^{N} g_i \frac{(\omega\lambda_i)^2}{1+(\omega\lambda_i)^2}$$

$$G''(\omega) = \sum_{i=1}^{N} g_i \frac{\omega \lambda_i}{1 + (\omega \lambda_i)^2}$$

$$G(t) = \sum_{i=1}^{N} g_i \exp(-t/\lambda_i)$$

where N is the number of modes and $g_i$ and $\lambda_i$ are the weight and time for each of the modes. (See J. D. Ferry, Viscoelastic Properties of Polymers, John Wiley & Sons, 1980, pp. 224-263.) A relaxation spectrum may be defined for the polymer using software such as IRIS® rheological software, which is commercially available from IRIS Development. Once the distribution of modes in the relaxation spectrum is calculated, the first and second moments of the distribution, which are analogous to Mn and Mw, the first and second moments of the molecular weight distribution, are calculated as follows:

$$g_I = \sum_i g_i \Big/ \sum_i g_i/\lambda_i$$

$$g_{II} = \sum_i g_i \lambda_i \Big/ \sum_i g_i$$

RSI is defined as gII/gI.

Normalized Relaxation Spectrum Index (nRSI)

The normalized RSI may be calculated from the RSI values using the following equation:

$$nRSI = RSI * MI^{0.6},$$

where MI is the melt index of the polymer in g/10 minutes, which is determined using ASTM D1238, condition E at 190°C and RSI is the relaxation spectrum index of the polymer in dimensionless units.

Shrink %

The shrink of a monofilament (expressed as the percentage reduction in length of a 1 meter sample of the monofilament) is measured by immersing the monofilament for 20 seconds in a bath of silicon oil maintained at 90°C. Shrinkage is then calculated as: (length before - length after)/length before * 100%.

Curl

Curl is measured by taking a bundle of 20 filaments and leaving it for 10 minutes in an oven at 90°C. The classification is made visually by ranking the samples based on a catalogue of standard samples. The method looks at how much the originally straight filaments tend to bend and curl on the sides. The samples are ranked between 1 - 5, with 1 representing filaments that showed no or very minor bending and curling and 5 representing filaments showing strong bending and curling.

Basis weight

The basis weight of filaments is typically reported in the industry by the dTex value. The dTex of a monofilament is equal to the weight in grams of 10 km of the monofilament.

Neutron Activation Method for Metals

Two sets of duplicate samples were prepared by transferring approximately 3.5 grams of the pellets into pre-cleaned 2 dram polyethylene vials. Standards were prepared for each metal tested from their NIST traceable standard solutions (Certi. pure from SPEX) into 2-dram polyethylene vials. They were diluted using milli-Q pure water to 6ml and the vials were heat-sealed. The samples and standards were then analyzed for these elements, using a Mark I TRIGA nuclear reactor. The reactions and experimental conditions used for these elements are summarized in the table below. The samples were transferred to un-irradiated vials before doing the gamma-spectroscopy. The elemental concentrations were calculated using CANBERRA software and standard comparative technique. ND means Not Detected at the quoted detection limit of the NAA measurement system. The table below provides measurement parameters for metals determination.

| Elements | Nuclear reaction | Isotope | Half life | Reactor Power | Irradiation Time | Waiting Time | Counting Time | Gamm a Energ y, keV |
|---|---|---|---|---|---|---|---|---|
| Al | $^{27}Al(n,\gamma)^{28}Al$ | $^{28}Al$ | 2.24 m | 250 kW | 2 m | 4m | 4.5 min | 1778.5 |
| Cl | $^{37}Cl(n,\gamma)^{38}Cl$ | $^{38}Cl$ | 37.2 m | 250 kW | 2m | 4m | 4.5 min | 1642.5 , 2166.5 |
| Cr | $^{50}Cr(n,\gamma)^{51}Cr$ | $^{51}Cr$ | 27.7 d | 250 kW | 90 m | 5h | 1.6 h | 320 |
| Hf | $^{180}Hf(n,\gamma)^{181}Hf$ | $^{181}Hf$ | 42.4 d | 250 kW | 90 m | 5h | 1.6 h | 133, 482 |
| Mg | $^{26}Mg(n,\gamma)^{27}Mg$ | $^{27}Mg$ | 9.46 m | 250 kW | 2m | 4m | 4.5 min | 843.8, 1014 |
| Mo | $^{98}Mo(n,\gamma)^{99}Mo$ | $^{99}Mo$ | 66.0 h | 250 kW | 90 m | 5h | 1.6 h | 181, 739.7, 141 |
| Nb | $^{93}Nb(n,\gamma)^{94m}Nb$ | $^{94m}Nb$ | 6.26 m | 250 kW | 2m | 4m | 4.5 min | 871 |
| Ta | $^{181}Ta(n,\gamma)^{182}Ta$ | $^{182}Ta$ | 114.4 d | 250 kW | 90 m | 5h | 1.6 h | 1121, 1222 |
| Ti | $^{50}Ti(n,\gamma)^{51}Ti$ | $^{51}Ti$ | 5.76 m | 250 kW | 2m | 4m | 4.5 min | 320 |
| W | $^{186}W(n,\gamma)^{187}W$ | $^{187}W$ | 23.7 h | 250 kW | 90 m | 5h | 1.6 h | 135, 481 |
| V | $^{51}V(n,\gamma)^{52}V$ | $^{52}V$ | 3.75 m | 250 kW | 2m | 4m | 4.5 min | 1434 |
| Zr | $^{96}Zr(n,\gamma)^{97}Zr$ | $^{97}Zr$ | 16.91 h | 250 kW | 90 m | 5h | 1.6 h | 743.4 |

## EXAMPLES

A multi-metal catalyst is prepared and used to prepare the inventive ethylene-based polymer (Inv. EBP) in a solution polymerization. The inventive ethylene-based polymer is used to prepare inventive artificial turf filaments. Testing is carried out on both the ethylene-based polymer and the artificial turf filaments.

Inventive Catalyst Preparation

To approximately 109 kg of 0.20M $MgCl_2$ slurry was added 7.76 kg of EADC solution (15 wt% in heptanes), followed by agitation for 8 hours. A mixture of $TiCl4/VOCl_3$ (85 mL and 146 mL, respectively) was then added, followed by a solution of $Zr(TMHD)_4$ (0.320 kg of a 0.30 M solution in Isopar E). These two additions were performed sequentially within 1 hour of each other. The resulting catalyst premix was aged with agitation for an additional 8 h prior to use.

Inventive Ethylene-Based Polymer (Inv. EBP)

All raw materials (ethylene, 1-hexene, 1-octene) and the process solvent (an isoparaffinic solvent under the tradename ISOPAR E, which is commercially available from ExxonMobil Corporation) are purified with molecular sieves before introduction into the reaction environment. Hydrogen is supplied in pressurized cylinders as a high purity grade and is not further purified. The reactor monomer feed (ethylene) stream is pressurized via a mechanical compressor to a pressure that is above the reaction pressure, e.g. 750 psig. The solvent and comonomer (1-octene) feed is pressurized via a mechanical positive displacement pump to pressure that is above the reaction pressure, e.g. 750 psig. The individual catalyst components are manually batch diluted to specified component concentrations with purified solvent (ISOPAR E) and pressured to a pressure that is above the reaction pressure, e.g. 750 psig. All reaction feed flows are measured with mass flow meters and independently controlled with computer automated valve control systems.

The continuous solution polymerization reactor consists of a liquid full, non-adiabatic, isothermal, circulating, loop. Independent control of all fresh solvent, monomer, comonomer, hydrogen, and catalyst component feeds is possible. The combined solvent, monomer, comonomer and hydrogen feed is temperature controlled to anywhere between 5° C to 50° C and typically 40° C by passing the feed stream through a heat exchanger. The fresh comonomer feed to the polymerization reactor is aligned to add comonomer to the recycle solvent. The total fresh feed to the polymerization reactor is injected into the reactor at two locations roughly with equal reactor volumes between each injection location. The fresh feed is controlled typically with each injector receiving half of the total fresh feed mass flow. The catalyst components are injected into the polymerization reactor through a specially designed injection inlet device and are combined into one mixed procatalyst/cocatalyst feed stream prior to injection into the reactor. The cocatalyst component is fed based on calculated specified molar ratios to the procatalyst component. Immediately following each fresh injection location (either feed or catalyst), the feed streams are mixed with the circulating polymerization reactor contents with Kenics static mixing elements. The contents of the reactor are continuously circulated through heat exchangers responsible for removing much of the heat of reaction and with the temperature of the coolant side responsible for maintaining an isothermal reaction environment at the specified temperature. Circulation around the reactor loop is provided by a screw pump. The effluent from the polymerization reactor (containing solvent, monomer, comonomer, hydrogen, catalyst components, and molten polymer) exits the reactor loop and enters a zone where it is contacted with a deactivating and acid scavenging agent (typically calcium stearate and the accompanying water of hydration) to stop the reaction and scavenge hydrogen chloride. In addition, various additives such as anti-oxidants can be added at this point. The stream then goes through another set of Kenics static mixing elements to evenly disperse the catalyst kill and additives.

Following additive addition, the effluent (containing solvent, monomer, comonomer, hydrogen, catalyst components, and molten polymer) passes through a heat exchanger to raise the stream temperature in preparation for separation of the polymer from the other lower boiling reaction components. The stream then passes through a pressure let down control valve (responsible for maintaining the pressure of the reactor at a specified target). The stream then enters a two stage separation and devolatilization system where the polymer is removed from the solvent, hydrogen, and unreacted monomer and comonomer. Impurities are removed from the recycled stream before entering the reactor again. The separated and devolatilized polymer melt is pumped through a die specially designed for underwater pelletization, cut into uniform solid pellets, dried, and transferred into a hopper. After validation of initial polymer properties, the solid polymer pellets are transferred to storage devices.

The portions removed in the devolatilization step may be recycled or destroyed. For example, most of the solvent is recycled back to the reactor after passing through purification beds. The recycled solvent can still have unreacted co-monomer in it that is fortified with fresh co-monomer prior to re-entry to the reactor. The recycled solvent can still have some hydrogen which is then fortified with fresh hydrogen.

Tables 1-3 summarize polymerization conditions for the Inventive Ethylene-Based Polymer Composition. Additives used in the polymerization include 400 ppm calcium stearate, 500 ppm DHT-4a, 1000 ppm IRGAFOS 168 (which is tris (2,4 di-tert-butylphenyl) phosphite), 250 ppm IRGANOX 1076 (which is octadecyl-3-(3,5-di-tert-butyl-4-hydroxyphenyl)propionate), and 200 ppm IRGANOX 1010 (which is tetrakis (methylene (3,5-di-tert-butyl-4-hydroxyhydrocinnamate)). DHT-4a is a synthetic hydrotalcites commercially available from Kisuma Chemicals BV. IRGAFOS 168, IRGANOX 1076, and IRGANOX 1010 are commercially available from BASF.

Comparative Ethylene-Based Polymer (Comp. EBP)

A Ziegler-Natta catalyzed ethylene/1-octene copolymer having a melt index of 2.3 g/10 min and a density of 0.917 g/cc (DOWLEX™ SC 2107G, available from The Dow Chemical Company, Midland, MI) is used for the comparative polymer.

**Table 1**

| REACTOR FEEDS | Inv. EBP |
| --- | --- |
| Primary Reactor Feed Temperature (°C) | 40 |
| Primary Reactor Total Solvent Flow (lb/hr) | 1,948 |
| Primary Reactor Fresh Ethylene Flow (lb/hr) | 375 |
| Primary Reactor Total Ethylene Flow (lb/hr) | 390 |
| Comonomer Type | 1-hexene |
| Primary Reactor Fresh Comonomer Flow (lb/hr) | 41 |
| Primary Reactor Total Comonomer Flow (lb/hr) | 210 |
| Primary Reactor Feed Solvent/Ethylene Ratio | 5.19 |
| Primary Reactor Fresh Hydrogen Flow (sccm) | 5096 |

(continued)

| REACTOR FEEDS | Inv. EBP |
|---|---|
| Primary Reactor Hydrogen mole% | 0.200 |

**Table2** (1 psig = 6.89476 kPa; 1 ft$^2$ = 929.03 cm$^2$)

| REACTION CONDITIONS | Inv. EBP |
|---|---|
| Primary Reactor Control Temperature (°C) | 175 |
| Primary Reactor Pressure (Psig) | 725 |
| Primary Reactor FTnIR Outlet [C2] (g/L) | 8.1 |
| Primary Reactor $\log_{10}$ Viscosity (log(cP)) | 2.29 |
| Primary Reactor Polymer Concentration (wt%) | 17.2 |
| Primary Reactor Exchanger's Heat Transfer Coefficient (BTU/(hr ft$^2$ °F)) | 33 |
| Primary Reactor Polymer Residence Time (hr) | 0.08 |
| Overall Ethylene conversion by vent (wt%) | 92.0 |

**Table 3** (1 lb = 0.453592 kg)

| CATALYST | Inv. EBP |
|---|---|
| Primary Reactor Catalyst | Inventive Catalyst |
| Primary Reactor Catalyst Flow (lb/hr) | 1.02 |
| Primary Reactor Catalyst Concentration (ppm) | 258 |
| Primary Reactor Catalyst Efficiency (M lbs Poly/lb Zr) | 1.52 |
| Primary Reactor Catalyst Metal Molecular Weight (g/mol) | 47.9 |
| Primary Reactor Co-Catalyst Molar Ratio | 10.0 |
| Primary Reactor Co-Catalyst Type | TEA* |
| Primary Reactor Co-Catalyst Flow (lb/hr) | 1.57 |
| Primary Reactor Co-Catalyst Concentration (ppm) | 4,000 |
| * TEA = tri-ethyl-aluminum | |

Table 4 provides selected properties of the inventive ethylene-based polymer and comparative ethylene-based polymer.

**Table 4**

| Polymer | Density (g/cc) | Melt Index (I2) (g/10 min) | Melt Flow Ratio (I10/I2) | CDBI | RSI (relaxation spectrum index) | nRSI (normalized RSI) |
|---|---|---|---|---|---|---|
| Comp. EBP (DOWLEX ™ SC 2107G) | 0.917 | 2.3 | 8.1 | -- | 6.3 | 10.38 |
| Inv. EBP | 0.917 | 3.0 | 7.1 | 49.6% | 4.5 | 8.70 |

Artificial Turf Filament

The inventive and comparative artificial turf monofilaments were prepared from the inventive and comparative ethylene-based polymers, respectively. The inventive monofilament formulation comprises 94 wt.% of inventive ethylene-based polymer, 5 wt.% color masterbatch BASF Sicolen 85125345, and 1 wt.% processing aid Argus ARX-741. The comparative monofilament formulation comprises 94 wt.% of comparative ethylene-based polymer, 5 wt.% color masterbatch BASF Sicolen 85125345, and 1 wt.% processing aid Argus ARX-741. The additives were blended with the polymer compositions prior to extrusion. Each of the monofilaments was prepared on an extrusion line from Oerlikon Barmag (Remscheid, Germany) (*See* FIG. 1) as described herein.

Table 5 and FIG. 1 provide specific conditions of the equipment used in preparing the inventive and comparative monofilaments.

**Table 5**

| Parameter | Value |
|---|---|
| Die type | sports die (4 die profiles as shown in FIG. 3, total 48 holes) |
| Extruder Temperature | melt T 230°C |
| Distance die-to-water bath (see FIG. 1) | 40 mm |
| Temperature water bath | 35°C |
| Temperature stretching oven | 97°C |
| Temperature annealing ovens | Oven 1: 118°C Oven 2: 118°C Oven 3: 115°C |
| Final speed - V5 (FIG. 1) | 140 m/min |

Referring to FIG. 3, the die profiles used are depicted.

The inventive and comparative monofilaments were tested for shrinkage and curl, and the results are shown in Tables 6 and 7.

**Table 6** - **Inventive Monofilament Results**

| Die profile | Monofilament Stretch ratio | Relaxation Ratio 1 (V3/V2 as shown In FIG.1) | Relaxation Ratio 2 (V5/V3 as shown in FIG. 1) | Basis Weight (dtex) | Shrink % | Curl |
|---|---|---|---|---|---|---|
| P1 | 5.50 | 0.75 | 0.9 | 2014 | 4.8 | 1.0 |
| P2 | 5.50 | 0.75 | 0.9 | 1934 | 4.5 | 2.0 |
| P3 | 5.50 | 0.75 | 0.9 | 1942 | 4.2 | 1.0 |
| P4 | 5.50 | 0.75 | 0.9 | 1954 | 4.5 | 1.0 |

**Table 7 - Comparative Monofilament Results**

| Die profile | Monofilament Stretch ratio | Relaxation Ratio 1 (V3/V2 as shown In FIG.1) | Relaxation Ratio 2 (V5/V3 as shown in FIG. 1) | Basis Weight (dtex) | Shrink % | Curl |
|---|---|---|---|---|---|---|
| P1 | | 0.75 | 0.9 | 1998 | 4.3 | 1.0 |
| P2 | 5.50 | 0.75 | 0.9 | 1958 | 5.1 | 3.0 |
| P3 | | 0.75 | 0.9 | 1944 | 3.8 | 2.0 |
| P4 | | 0.75 | 0.9 | 1942 | 5.6 | 3.5 |

As shown in Table 6, across the various die profiles (P1, P2, P3, and P4), you can see acceptable performance for the inventive monofilament. The inventive filaments show less variation of shrinkage and curl over different profiles. However, as shown in Table 7, acceptable performance for the comparative monofilament is not consistent and wide variation of shrinkage and curl over different profiles is shown.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

While particular embodiments of the present invention have been illustrated and described, it would be obvious to those skilled in the art that various other changes and modifications can be made without departing from the scope of the invention. It is therefore intended to cover in the appended claims all such changes and modifications that are within the scope of this invention.

## Claims

1.  A method of manufacturing an artificial turf filament, the method comprising:

    providing an ethylene-based polymer, wherein the ethylene-based polymer comprises:
    the reaction product of ethylene and one or more alpha-olefin comonomers in the presence of a catalyst composition comprising a multi-metallic procatalyst via solution polymerization, wherein the multi-metallic procatalyst is at least tri-metallic, and the ethylene-based polymer is **characterized by**:

    (i) a melt index, $I_2$, measured according to ASTM D 1238 (2.16 kg @190°C), of from 0.5 to 5 g/10 min;
    (ii) a density measured according to ASTM D792 from 0.905 to 0.940 g/cm$^3$;
    (iii) a melt flow ratio, I10/I2, of from 6.5 to 7.4, wherein $I_{10}$ is measured according to ASTM D1238 (10 kg @ 190°C) and $I_2$ is measured according to ASTM D1238 (2.16 kg @ 190°C); or
    (iv) a molecular weight distribution (Mw/Mn), as measured using the method according to the description, of from 2.5 to 3.5; and

    extruding the ethylene-based polymer into an artificial turf filament;
    wherein the filament exhibits a shrink, measured according to the method described herein, of less than 5.5%; and
    wherein the multi-metallic procatalyst comprises at least magnesium, titanium, zirconium and vanadium.

2.  The method of claim 1, wherein the method further comprises stretching the artificial turf filament to a predetermined stretch ratio.

3.  The method of claim 2, wherein the stretch ratio is at least 4.

## Patentansprüche

1.  Verfahren zum Herstellen eines Kunstrasenfilaments, das Verfahren umfassend:
    Bereitstellen eines ethylenbasierten Polymers, wobei das ethylenbasierte Polymer umfasst:

    das Reaktionsprodukt von Ethylen und einem oder mehreren Alpha-Olefin-Comonomeren in Gegenwart einer Katalysatorzusammensetzung, die einen multimetallischen Prokatalysator umfasst, durch Lösungspolymerisation, wobei der multimetallische Prokatalysator mindestens trimetallisch ist und das ethylenbasierte Polymer **gekennzeichnet ist durch:**

    (i) einen Schmelzindex, $I_2$, gemessen gemäß ASTM D 1238 (2,16 kg bei 190 °C), von 0,5 bis 5 g/10 Min.;
    (ii) eine Dichte, gemessen gemäß ASTM D792 von 0,905 bis 0,940 g/cm$^3$;
    (iii) ein Schmelzflussverhältnis, $I_{10}/I_2$, von 6,5 bis 7,4, wobei $I_{10}$ gemäß ASTM D1238 (10 kg bei 190 °C) gemessen wird und $I_2$ gemäß ASTM D1238 gemessen (2,16 kg bei 190 °C) wird; oder
    (iv) eine Molekulargewichtsverteilung (Mw/Mn), gemessen mit dem Verfahren gemäß der Beschreibung, von 2,5 bis 3,5;

    und
    Extrudieren des ethylenbasierten Polymers zu einem Kunstrasenfilament;
    wobei das Filament eine Schrumpfung, gemessen nach dem hierin beschriebenen Verfahren, von weniger als 5,5 % aufweist; und
    wobei der multimetallische Prokatalysator mindestens Magnesium, Titan, Zirkonium und Vanadium umfasst.

2.  Verfahren nach Anspruch 1, wobei das Verfahren ferner das Strecken des Kunstrasenfilaments auf ein vorbestimmtes Streckverhältnis umfasst.

3. Verfahren nach Anspruch 2, wobei der Streckverhältnis mindestens 4 beträgt.

**Revendications**

1. Procédé de fabrication d'un filament de gazon artificiel, le procédé comprenant :
la fourniture d'un polymère à base d'éthylène, dans lequel le polymère à base d'éthylène comprend :

le produit de réaction de l'éthylène et d'un ou plusieurs comonomères d'alpha-oléfines en présence d'une composition catalytique comprenant un procatalyseur multimétallique par le biais d'une polymérisation en solution, dans lequel le procatalyseur multimétallique est au moins trimétallique, et le polymère à base d'éthylène est **caractérisé par** :

(i) un indice de fluidité, $I_2$, mesuré selon la norme ASTM D 1238 (2,16 kg @ 190 °C), allant de 0,5 à 5 g/10 min ;
(ii) une masse volumique mesurée selon la norme ASTM D792 allant de 0,905 à 0,940 g/cm$^3$ ;
(iii) un rapport d'écoulement à l'état fondu, $I_{10}/I_2$, allant de 6,5 à 7,4, dans lequel $I_{10}$ est mesuré selon la norme ASTM D1238 (10 kg @ 190 °C) et $I_2$ est mesuré selon la norme ASTM D1238 (2,16 kg @ 190 °C) ; ou
(iv) une distribution des masses moléculaires (Mw/Mn), telle que mesurée à l'aide du procédé selon la description, allant de 2,5 à 3,5 ;

et
l'extrusion du polymère à base d'éthylène en un filament de gazon artificiel ;
dans lequel le filament présente un retrait, mesuré selon le procédé décrit ici, inférieur à 5,5 % : et
dans lequel le procatalyseur multimétallique comprend au moins du magnésium, du titane, du zirconium et du vanadium.

2. Procédé selon la revendication 1, dans lequel le procédé comprend en outre l'étirement du filament de gazon artificiel à un rapport d'étirement prédéterminé.

3. Procédé selon la revendication 2, dans lequel le rapport d'étirement est d'au moins 4.

FIG. 1

**FIG.2**

**FIG. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2013190465 A
- EP 2752509 A
- WO 2011134897 A
- WO 2005052010 A
- US 7498282 B
- US 2014080970 A1
- US 6485662 B
- US 6159617 A
- US 20110015346 A1
- US 8729200 B

### Non-patent literature cited in the description

- **WILLIAMS** ; **WARD**. *J. Polym. Sci., Polym. Let.*, 1968, vol. 6, 621
- **MONRABAL et al.** *Macromol. Symp.*, 2007, vol. 257, 71-79
- **J. M. DEALY** ; **K. F. WISSBRUN** ; **VAN NOSTRAND REINHOLD**. *Melt Rheology and Its Role in Plastics Processing*, 1990, 269-297
- **S. H. WASSERMAN**. *J. Rheology*, 1995, vol. 39, 601-625
- **J. D. FERRY**. Viscoelastic Properties of Polymers. John Wiley & Sons, 1980, 224-263